# EUROPEAN PATENT APPLICATION

(11) **EP 2 667 315 A1**
(43) Date of publication of application: **27.11.2013**
(21) Application number: 12179755.9
(22) Date of filing: 08.08.2012
(51) Int. Cl.: G06F 21/10

(54) **Encrypted digital content player**

(30) Priority: 22.05.2012 PL 39927112
(71) Applicant: "E-JA" Sp. z o.o., 00-040 Warszawa (PL)
(72) Inventor: Hansen, Igor, 07-130 Lochow (PL); Kowalski, Michal, 01-565 Warszawa (PL)
(74) Representative: Pawlowski, Adam

(57) **Abstract**

An encrypted digital content (EDC) player comprising an input interface (101) connected to a content memory (102) and configured to write into the content memory (102) the encrypted digital content (EDC), a symmetric decryption unit (104) connected to the content memory (102) and to a register (105) for a content symmetric key (CSK), configured to decrypt the encrypted digital content (EDC) using the content symmetric key (CSK), a content decoder (106), connected to the symmetric decryption unit (104), configured to render the decrypted digital content (DC) through an output interface (107). The input interface (101) is additionally connected to a licence memory (103) and configured to write into the licence memory (103) the licence information (LI) associated with the encrypted digital content (EDC), wherein the licence information (LI) comprises: an encrypted content symmetric key (ECSK) encrypted using the player public key (PPuK) and conditions for content usage (CCU), encrypted together using a licensor private key (LPrK). The player (100) further comprises a licence processor (110), comprising a unit (111) for asymmetric decryption of licence information (LI), connected to the licence memory (103) and a register (108) for licensor public key (LPuK), configured to decrypt the licence information (LI) using the licensor public key (LPuK) in order to read out the encrypted content symmetric key (ECSK) and the conditions for content usage (CCU), a controller (112) configured to verify the conditions for content usage (CCU) and to control, on the basis of this verification, the operation of player (100) modules, and a unit (113) for asymmetric decryption of the encrypted content symmetric key (ECSK), connected to the register (114) for the player private key (PPrK) and to the register (105) for the content symmetric key (CSK), configured to decrypt the encrypted content symmetric key (ECSK) using the player private key (PPrK), and to write the decrypted content symmetric key (CSK) into the register (105) for content symmetric key (CSK).

## Description

The object of the invention is an encrypted digital content player.

Distribution of various kinds of digital content, such as audio, audio/video works or electronic books, requires improvements of systems for managing access rights to those assets. The distributed content should be efficiently protected against unauthorised copying or distribution, both by the third parties and by the legal licensees of that content.

There are various systems for symmetric and asymmetric encryption of information. In a symmetric system, both the source and the receiver of information use the same key. Every owner of such symmetric key can both encrypt and decrypt information. Therefore, symmetric encryption remains effective only as long as the symmetric key remains unavailable to the unauthorised persons. Exemplary algorithms for symmetric encryption are DES (Data Encryption Standard), IDEA (International Data Encryption Algorithm) or Rijndael (Joan Daemen and Vincent Rijmen).

Asymmetric encryption, referred to also as encryption using public key, is seen as a technique providing a higher level of confidentiality than the symmetric encryption. In asymmetric encryption there are used two keys - private and public. The public key is made available to anyone who wishes to encrypt information addressed to someone in the possession of the corresponding private key, or wishes to verify the authenticity of information which was encrypted using that private key. Exemplary algorithms of asymmetric encryption are Diffie-Hellman, RSA (Revest Shamir Adleman) or ElGamal.

US2007136610A1 "Smart card with data storage, set-top box, portable player for operating smart card with data storage and method for manufacturing smart card with data storage" describes a portable memory, which ensures secure storage and exchange of information. The smart card disclosed in this application comprises a section of memory for storage of information, for example audiovisual material, and a section of memory for storage of keys, which are to be used by a decryption unit of a device, for example a television decoder. The memory can be, for example, a FLASH type memory with the capacity of some megabytes or gigabytes. The smart card according to US2007136610A1 enables secure storage of information, which can be rendered using a suitable device which comprises a decryption module enabling the use of decryption keys. In this way, information stored on the smart card is not available for distribution or copying. Additionally, the smart card comprises a processor with an interface to the decryption keys in order to process access requests to the keys and requests for the transmission of information.

In typical television conditional access systems, the decryption keys are delivered from the smart card to the decoder of television signal. In such systems there exists a problem in that the device which decrypts the information and the device which supplies the keys necessary for the decryption of the information, are separate. Therefore, there exists a point in the connection of these two systems where these keys can be intercepted and information can be decrypted. In the case of digital television the situation is even more difficult, as the keys are delivered to the user through an open channel accessible to the public (for example, satellite transmission), which strongly questions the security of the system as a whole.

There are also other systems for the distribution of secure digital content, for example the FairPlay system deployed in media players by Apple company. In that system a central server holds information about all authorised players and generates unique user keys each time when new digital content is being sent to that user. The system is complicated and subject to abuse by unauthorised users.'

Moreover, US2002/0062445 describes a system for secure delivery of digital content, from the digital content distributor, to the user player device and then, onwards to the actual rendering unit like display or speakers. For content protection symmetric encryption is used. For transporting those encryption keys, along with the content, they are encrypted by the sender using receiver public key and decrypted by the receiver using his private key counterpart. This commonly used method for transporting encrypted information is sufficient when protecting the information against parties outside the sender/receiver pair. However, in content licensing, the sender also needs an assurance that the receiver himself will not use the information, beyond the agreed rules of making that information available. The sender (or better, the licensor), needs assurance that the receiver (or better, the licensee) will not have access to unencrypted information (or better, content) beyond the agreed rules, that he will not be able to further distribute copies of that content to be rendered by unauthorised third partes. The licensor also needs assurance that the delivered licensed content is also satisfactorily protected agains reasonably competent technological attempts by the licensee to violate the imposed security measures. For example that under no circumstances the licensee will be able to gain access to the symmetric content encrypton key or private key to decrypt the symmetric key after reception. The architecture of the Information Processing Apparatus, presented in the application, does not provide such assurance as the common bus architecture and bidirectionality of shown data paths do not prohibit for such keys to be read out to the outside and subsequently used to decrypt the content. A change in the programming of the Apparatus, which change is beyond licensor control, can render all the described protection mechanisms useless. Complete protection of content can be provided only through a suitable unidirectional datapaths of the Apparatus architecture. A suitable mechanism should also be provided to protect the licensor against remote spoofing of the Apparatus by devices made capable to read the aforementioned keys.

Another system is known from US2010/0008500, which describes a software system for licensed content protection and a way of supporting the associated licensing processes and business models. Like US2002/0062445 it deploys asymmetric cryptography and licensee keys to protect, manage and to deliver the content encryption symmetric keys. And, like that previous application, it expects the licensor to trust that the user-end media rendering software will not violate the license conditions and that it cannot be spoofed. It fails to provide an absolute assurance that the content cannot be used beyond conditions set by the licensing agreement, even in spite of the most competent efforts on the receiving end of content licensing scheme (whether legitimate or not). The application does not describe the means, like for example appropriate player hardware architecture, that could be used to provide the licensor with such assurance.

Furthermore, US6418421 presents a software system for licensed content protection and associated ways and methods for distributing that content. It describes other ways of deploying the keys, even multitude of keys to protect the content. However, like both previous positions it is a software-only solution which fails to inhibit the owner of legitimately acquired content from deploying technical means to violate the conditions of the licensing agreement.

In addition, EP1077398 presents another complex system for licensed content protection and associated ways and methods for such content distribution. In addition to the methods described above, it also includes a network-based content access clearing house delivering the relevant content access rights to end users. And, similarly to all the previous systems, being an end-to-end software approach, it fails to provide an absolute protection of legitimately received content against sufficiently competent mis-use.

It would be desirable to improve the content distribution systems in order to improve the security and the tightness of cryptographic system, while retaining high level of usefulness for the users. In particular, it would be beneficial to develop a system ensuring the security of content at a level inhibiting its abuse by the rightful owner, for example inhibiting unauthorised dissemination of that content.

The object of the invention is an encrypted digital content (EDC) player comprising an input interface connected to a content memory and configured to write into the content memory the encrypted digital content (EDC), a symmetric decryption unit connected to the content memory and to a register for a content symmetric key (CSK), configured to decrypt the encrypted digital content (EDC) using the content symmetric key (CSK), a content decoder, connected to the symmetric decryption unit, configured to render the decrypted digital content (DC) through an output interface. The input interface is additionally connected to a licence memory and configured to write into the licence memory the licence information (LI) associated with the encrypted digital content (EDC), wherein the licence information (LI) comprises: an encrypted content symmetric key (ECSK) encrypted using the player public key (PPuK) and conditions for content usage (CCU), encrypted together using a licensor private key (LPrK). The player further comprises a licence processor, comprising a unit for asymmetric decryption of licence information (LI), connected to the licence memory and a register for licensor public key (LPuK), configured to decrypt the licence information (LI) using the licensor public key (LPuK) in order to read out the encrypted content symmetric key (ECSK) and the conditions for content usage (CCU), a controller configured to verify the conditions for content usage (CCU) and to control, on the basis of this verification, the operation of player modules, and a unit for asymmetric decryption of the encrypted content symmetric key (ECSK), connected to the register for the player private key (PPrK) and to the register for the content symmetric key (CSK), configured to decrypt the encrypted content symmetric key (ECSK) using the player private key (PPrK), and to write the decrypted content symmetric key (CSK) into the register for content symmetric key (CSK).

Preferably, the licensor public key (LPuK) register is a write-once register connected to the input interface.

Preferably, the licensor public key (LPuK) register is a multiple write register connected to the input interface.

Preferably, the input interface is configured to communicate via a first communication channel, used to transmit the encrypted digital content (EDC) and a second communication channel, of a type other than the first communication channel, used to transmit the licence information (LI).

Another object of the present invention is a method of rendering encrypted digital content (EDC) in a player, the method comprising the steps of receiving the encrypted digital content (EDC), decrypting the encrypted digital content (EDC) using a content symmetric key (CSK) and rendering the decrypted digital content (DC). The method further involves receiving a licence information (LI), associated with the encrypted digital content (EDC), the licence information (LI) comprising: an encrypted content symmetric key (ECSK) encrypted using a player public key (PPuK) and conditions for content usage (CCU), encrypted together using a licensor private key (LPrK), decrypting the licence information (LI) using a licensor public key (LPuK) in order to read out the encrypted content symmetric key (ECSK) and the conditions for content usage (CCU), verifying the conditions for content usage (CCU) and using the result of this verification to control the operation of the player, and decrypting the encrypted content symmetric key (ECSK) using a player private key (PPrK) and making available the decrypted content symmetric key (CSK) to decrypt the encrypted digital content (EDC).

Preferably, the method involves receiving the encrypted digital content (EDC) through a communication channel separate from the channel used to receive licence information (LI).

Another object of the present invention is a computer program comprising program code to execute all the steps of the method according to the invention, when the program is executed on a computer, as well as a computer-readable data carrier, comprising computer-executable instructions to execute all the steps of the method according to the invention.

The object of the invention is also a system for distributing encrypted digital content (EDC), wherein the system comprises a memory of encrypted digital content (EDC), encrypted using content symmetric key (CSK), a communication interface configured to read from a content player a player public key (PpuK), a symmetric encryption unit, configured to generate licence information (LI), by encrypting, using the player public key (PPuK), the content symmetric key (CSK), adding to the encrypted content symmetric key (ECSK) conditions for content usage (CCU), pre-set by the generator and encrypting all using the licensor private key (LPrK), wherein the communication interface is further configured to make available to the content player the encrypted digital content (EDC) and the licence information (LI) associated with that content.

Preferably, the memory of encrypted digital content (EDC), the generator of conditions for content usage (CCU) and the communication interface form the modules of a licence generation unit, which is a device physically separate from a content encryption unit, comprising the asymmetric encryption module.

Preferably, the content encryption unit further comprises a memory of unencrypted digital content (DC) and a symmetric encryption unit configured to encrypt, using the content symmetric key (CSK) obtained from generator, the digital content (DC) into the encrypted digital content (EDC).

Preferably, the licence generation unit has a form of an interactive content delivery kiosk.

Preferably, the conditions for content usage (CCU) comprise at least one of the following conditions: a deadline for the rendering of content, a number of allowed renderings, permitted locations for the rendering of content.

The invention also relates to a computer-implemented method for encrypted content delivery, which comprises the steps of reading the encrypted digital content (EDC), encrypted using a content symmetric key (CSK), reading a player public key (PPuK) from a player, generating a licence information (LI) by encrypting the content symmetric key (CSK) using the player public key (PPuK), adding to the encrypted content symmetric key (ECSK) the determined conditions for content usage (CCU) and by encrypting it together using the licensor private key (LPrK), and making available the encrypted digital content (EDC) and the associated licence information (LI) to the content player.

A further object of the invention is a system for distribution of encrypted digital content, comprising the system for delivery of encrypted digital content according to the invention and the encrypted digital content players according to the invention.

The invention will be shown by means of exemplary embodiment on a drawing, in which:
Fig. 1 shows a simplified block diagram of an encrypted digital content player;
Fig. 2 shows the process of constructing the licence information LI;
Fig. 3 shows the process of preparing the encrypted digital content EDC;
Fig. 4 shows the process of rendering the digital content in the player;
Fig.5 shows a simplified block diagram of a system for management of delivery of encrypted digital content EDC.

According to the invention, the encrypted digital content player can have a form of a compact multimedia content player, where the encrypted content transmitted through the input interface is stored in a secure manner and rendered according to the conditions comprised within the licence, which defines the entitlements to use this content in that specific player.

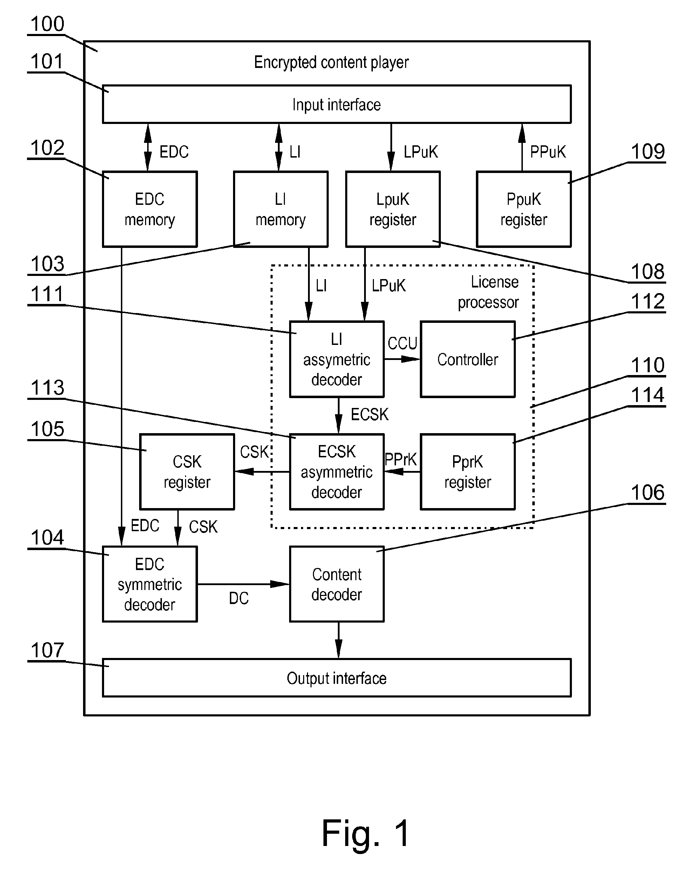

Fig. 1 presents a simplified block diagram of the encrypted digital content (EDC) player 100. The presented player is configured to generate signal to the external receiver, for example an audio amplifier or a TV set, buy it can also be equipped with its own speakers and/or a screen.

The player 100 comprises an input interface 101, for example a USB, a FireWire or a similar interface, cable based or wireless. The input interface 101 can be used to transmit into the player the encrypted digital content EDC, licence information LI and other information necessary for the correct operation of the player.

Prior to delivering the player 100 to its end user, its registers 109 and 114 are loaded with a player public key PPuK and a player private key PPrK, assigned to the player 100. The keys can be written via the input interface 101 or an interface dedicated solely to writing of those keys and which can be subsequently disabled.

The player 100 comprises a non-volatile memory 102, which stores the encrypted digital content EDC written through interface 101, as well as a non-volatile memory 103, which stores licence information LI, also written through interface 101 and which is assigned to the specific encrypted digital content EDC.

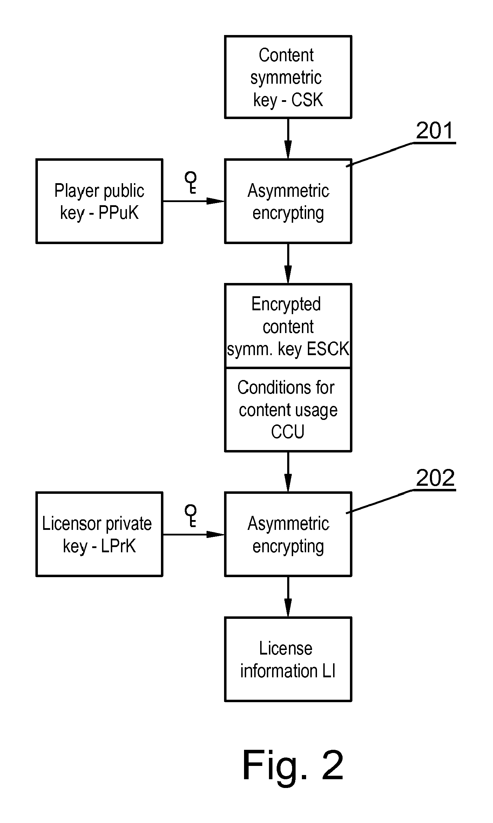

Licence information LI defines the entitlements for the rendering of a given content. Licence information LI is constructed according to the process shown in Fig. 2 and it comprises at least a content symmetric key CSK plus the information specifying the conditions for content usage CCU. In order to ensure the security of licence information, the content symmetric key CSK is encrypted in step 201 using the player public key PPuK, so that it is sent to the player in the encrypted form ECSK, which can be read only within that player using the player private key PPrK. The encrypted content symmetric key ECSK and the conditions for content usage CCU are additionally encrypted together in step 202 using the licensor private key LPrK, which protects this information against any changes by unauthorised third parties.

Conditions for content usage CCU define, for example, a time limit on the rendering of content, a maximum number of renderings or licensed locations (e.g. countries) for the rendering of the licensed content.

The encrypted digital content EDC is decrypted using a symmetric decryption module 104, configured to decrypt the content using the content symmetric key CSK read out from the register 105. The decrypted digital content DC is sent from the decryptor 104 to the content decoder 106, which can be, for example, an audio, an audio/video decoder, a text processor etc. The decoded information, for example an audio and/or a video stream is sent to the output interface 107, which can be an interface to an external device, such as speakers or a TV set, for example a mini-jack or a HDMI interface. Optionally, the output interface 107 may have a form of speakers or a screen integral with the player 100.

In addition, the player 100 comprises a licence processor 110, for reading from the licence information LI the conditions for content usage CCU and reading the content symmetric key CSK to render the given digital content. The licence processor 110 comprises a module 111 for asymmetric decryption of the licence information LI, configured to decrypt the licence information LI using a licensor public key LPuK, read out from the register 108. The licensor public key register 108 can be written from outside using the input interface 101, if the player is to have the capability to render content from various licensors. The register 108 can also be a write-once register, not accessible from the outside, which allows to limit the functionality of the player to the content from a single, specific licensor. The module 111 for decryption of the licence information LI provides on its output the decrypted conditions for content usage CCU and the encrypted content symmetric key ECSK.

The conditions for content usage CCU are sent to the controller 112, which is configured to verify them and use them to control further operation of the player - for example, to enable or disable the operation of other modules, depending on whether the conditions allow or do not allow rendering of content.

The encrypted content symmetric key ECSK is sent to the asymmetric decryption module 113, where it is decrypted using the player private key PPrK, read from the register 114. The decrypted content symmetric key CSK is written into the register 105, which is then used by the symmetric decryption module 104.

The presented construction of the encrypted digital content player ensures the security of both the content itself, as well as of the conditions of its rendering. First, the digital content is encrypted using content symmetric key CSK, which is then necessary for its decryption. The content symmetric key CSK is sent to the player after its encryption using the player public key PpuK, so that it can be decrypted only within that player. In addition, the conditions for content usage CCU are encrypted using the licensor private key LPrK, so that it is not possible to modify these conditions (for example, in order to increase the number of allowed renderings or to to extend the time window for these conditions) by unauthorised persons. Sensitive information, like the decrypted digital content DC, the content symmetric key CSK or the player private key PPrK cannot be read out through the external interfaces of the player, so that both the digital content and the conditions for their rendering remain secure.

In order to increase the security of the stored information and to prohibit their readout during device operation by using external measuring devices, all the modules of the player can be made in the form of a single integrated circuit, having external connections that include only the power supply and terminals of input and output interfaces. Alternatively, the modules of the interface can be made as several integrated circuits, assembled in a single common casing secured against opening, for example a casing causing the destruction of internal circuits during opening attempt and where only power, input and output interface terminals are provided outside the casing.

Additionally, the input interface 101 can be configured to allow writing of the encrypted digital content EDC, together with the associated licence information LI into a memory external to the player 100, so as to allow the user the creation of his own library of acquired content. Such solution is useful when the licence information does not comprise limits for either the duration or the number of renderings of the content, but only restrict rendering of content to that specific player. In this case the user can freely transfer the information between the player 100 and the external memory, both ways.

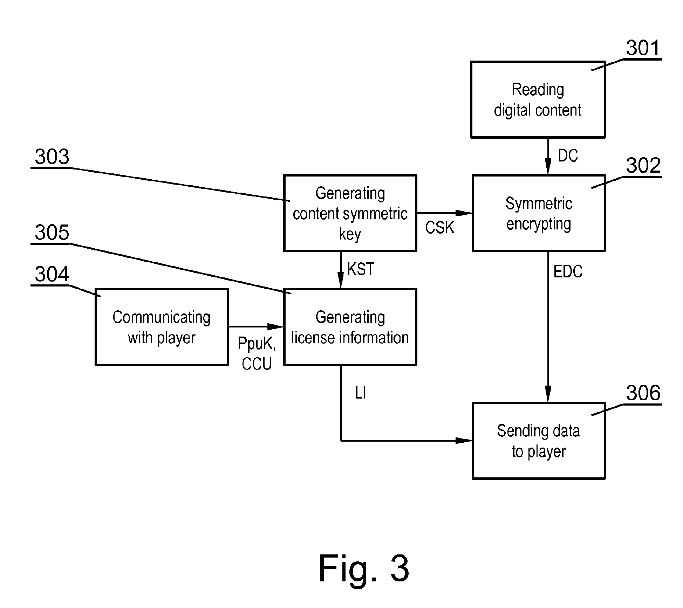

Fig. 3 presents the process of preparing the encrypted digital content EDC by the licensor, i.e. the original owner of the content (for example a film or a music studio) or the specialised distributor of digital content.

On the licensor side, the content can be stored in the form of digital files in a secure content library. In step 301 the content is read out and in step 302 it is encrypted using a content symmetric key, generated in step 303. Steps 301-303 can be executed only once when adding each new content to the library, and the generated content symmetric key CSK with the encrypted digital content EDC can be written to the library for subsequent access. Alternatively, steps 301-303 can be invoked dynamically, i.e. for each content access request from a user and for each of these times the generated content symmetric key CSK can be different.

Then, in step 304, the system communicates with the player in order to obtain the player public key PPuK and the conditions for content usage, which could be defined individually by the user of the player, for example the user could specify the required duration of content accessibility or a limit of the number of renderings, which would then be reflected in the fee required for making that content accessible. On the basis of information obtained in step 304, step 305 generates the licence information LI, according to the process shown in Fig. 2. In step 306 such generated licence information LI and the encrypted digital content EDC are sent to the player. For sending of information during step 306, separate transmission channels can be used, for example the encrypted data content can be delivered using a fast broadband data transmission channel, while the licence information can be delivered through a separate channel, e.g. through e-mail.

The process of content delivery can be executed through a computer connected to the Internet or through a dedicated delivery kiosk, where the user can directly plug in the player 100.

Steps 301-303 can be executed by another subject and/or in a location different from steps 304-305, allowing the separation of content distributor and licensor roles.

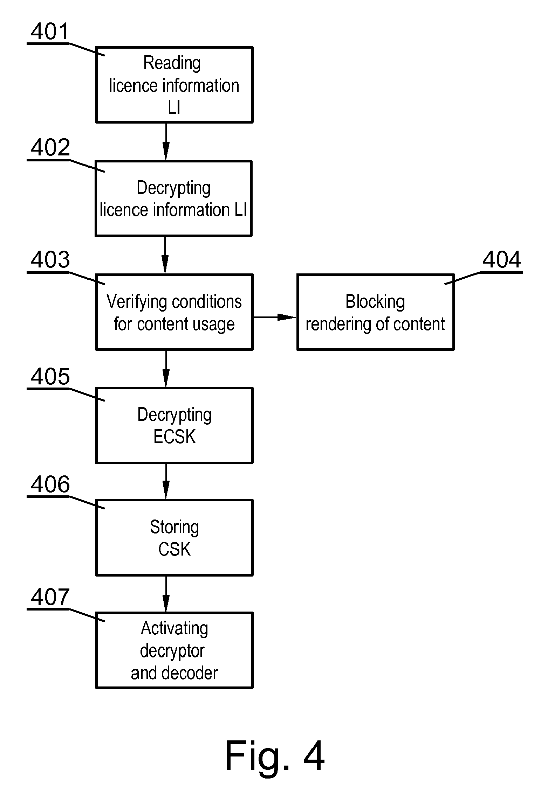

Fig. 4 presents a scheme for rendering of digital content in player 100. In step 401 the licence processor 110 is used to fetch the licence information LI, for the content selected by the user, from the licence memory 103. Then, in step 402 the licence information is decrypted using the licensor public key LPuK, fetched from the register 108. In step 403 the controller 112 is used to verify the conditions for content usage CCU and, if the conditions do not allow rendering of the content, then in step 404 further functions of rendering of the content are blocked. If the conditions for content usage allow rendering of the content, then in step 405 the encrypted content symmetric key ECSK is decrypted using the player private key PPrK fetched from the register 114. In step 406 the content symmetric key CSK is then sent to the register 105 and in step 407 the symmetric decryption module 104 and the content decoder 106 are activated in order to render the encrypted digital content associated with the licence information LI read out on step 401.

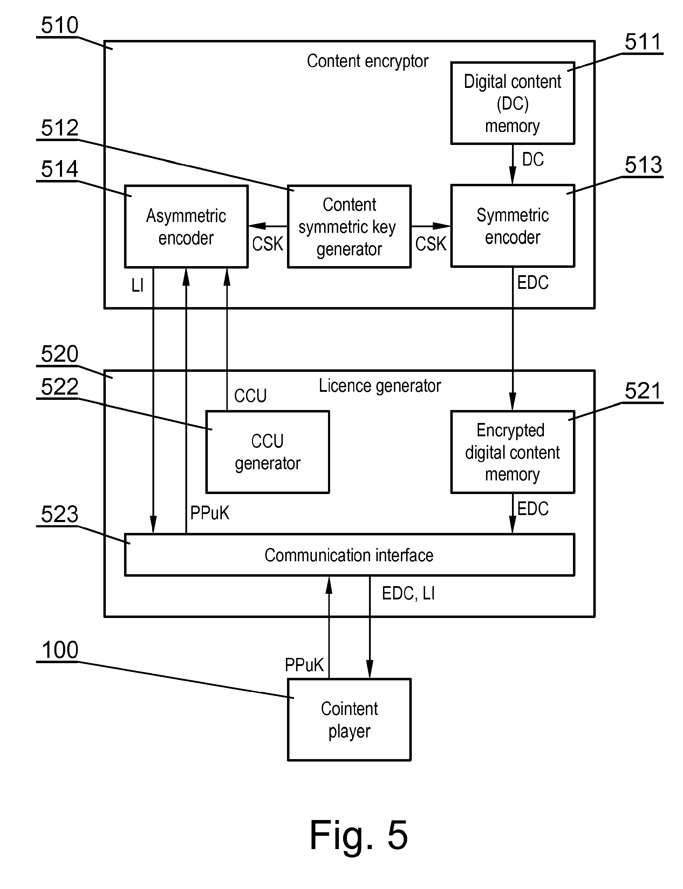

Fig. 5 presents a simplified block diagram of a system for managing the delivery of encrypted digital content according to the invention.

The first part of the system is a content encryption unit 510, which comprises a non-volatile memory 511 for storing unencrypted digital content DC. The unit additionally comprises a content symmetric key generator 512 and a symmetric encryption module 513 for encrypting digital content using the content symmetric key CSK. The unit 510 also comprises an asymmetric encryption device 514 for encrypting the content symmetric key CSK using the given player public key PpuK.

The second part of the system is a licence generation unit 520. The licence generator unit 520 can form a single unit with the content encryption unit 510 or they can be separate. Preferably, the licence generator 520 is a delivery kiosk, which can be set up in public places and to which users can connect players in order to acquire the encrypted digital content EDC and the licence information LI needed to render this content.

The licence generation unit 520 has a non-volatile memory 521 to store encrypted data content EDC generated by the content encryption unit 510. Optionally, the licence generation unit 520 reads from the content encryption unit 510 the encrypted data content EDC prepared there upon user request. The licence generation unit 520 comprises a player communications interface 523, used to send encrypted digital content EDC and licence information LI to the player and to fetch the player public key PPuK from the player. In addition, the licence generation unit 520 comprises a generator 522 of the conditions for content usage CCU, which is used by the recipient of the digital content to define the required conditions, such as the number of allowed renderings or the lifetime of the licence for the rendering of content. The set conditions for content usage CCU and the player public key PpuK are sent to the content encryption unit 510, which uses them to generate licence information, which can then be sent by the licence generation unit to the player 100.

The presented invention can be implemented using dedicated electronic circuits, ensuring the security of information encryption, specially of the encryption and of the generator devices. Alternatively, the solution can be also implemented using one or more computer programs, executed using a computer with a memory and a processor or other control device.

Term "digital content" DC, used in this description, applies to a variety of digital content, representing audio, audio/video information, text information or other kind of multimedia information protected by copyright, for which it is desirable to retain control over its distribution and usage. Information can be in the form of digital files or in the form of real time streaming.

## Claims

1. An encrypted digital content (EDC) player comprising:
- an input interface (101) connected to a content memory (102) and configured to write into the content memory (102) the encrypted digital content (EDC),
- a symmetric decryption unit (104) connected to the content memory (102) and to a register (105) for a content symmetric key (CSK), configured to decrypt the encrypted digital content (EDC) using the content symmetric key (CSK),
- a content decoder (106), connected to the symmetric decryption unit (104), configured to render the decrypted digital content (DC) through an output interface (107),
**characterised in that:**
- the input interface (101) is additionally connected to a licence memory (103) and configured to write into the licence memory (103) the licence information (LI) associated with the encrypted digital content (EDC),
- wherein the licence information (LI) comprises: an encrypted content symmetric key (ECSK) encrypted using the player public key (PPuK) and conditions for content usage (CCU), encrypted together using a licensor private key (LPrK),
- and wherein the player (100) further comprises a licence processor (110), comprising:
o a unit (111) for asymmetric decryption of licence information (LI), connected to the licence memory (103) and a register (108) for licensor public key (LPuK), configured to decrypt the licence information (LI) using the licensor public key (LPuK) in order to read out the encrypted content symmetric key (ECSK) and the conditions for content usage (CCU),
o a controller (112) configured to verify the conditions for content usage (CCU) and to control, on the basis of this verification, the operation of player (100) modules, and
o a unit (113) for asymmetric decryption of the encrypted content symmetric key (ECSK), connected to the register (114) for the player private key (PPrK) and to the register (105) for the content symmetric key (CSK), configured to decrypt the encrypted content symmetric key (ECSK) using the player private key (PPrK), and to write the decrypted content symmetric key (CSK) into the register (105) for content symmetric key (CSK).

2. The player according to claim 1, **characterised in that** the licensor public key (LPuK) register (108) is a write-once register connected to the input interface (101).

3. The player according to claim 1, **characterised in that** the licensor public key (LPuK) register (108) is a multiple write register connected to the input interface (101).

4. The player according to claim 1 **characterised in that** the input interface (101) is configured to communicate via a first communication channel, used to transmit the encrypted digital content (EDC) and a second communication channel, of a type other than the first communication channel, used to transmit the licence information (LI).

5. A method of rendering encrypted digital content (EDC) in a player (100), the method comprising the steps of:
- receiving the encrypted digital content (EDC),
- decrypting the encrypted digital content (EDC) using a content symmetric key (CSK),
- rendering the decrypted digital content (DC),
**characterised by** further:
- receiving a licence information (LI), associated with the encrypted digital content (EDC), the licence information (LI) comprising: an encrypted content symmetric key (ECSK) encrypted using a player public key (PPuK) and conditions for content usage (CCU), encrypted together using a licensor private key (LPrK),
- decrypting the licence information (LI) using a licensor public key (LPuK) in order to read out the encrypted content symmetric key (ECSK) and the conditions for content usage (CCU),
- verifying the conditions for content usage (CCU) and using the result of this verification to control the operation of the player (100), and
- decrypting the encrypted content symmetric key (ECSK) using a player private key (PPrK) and making available the decrypted content symmetric key (CSK) to decrypt the encrypted digital content (EDC).

6. The method according to claim 5, **characterised by** receiving the encrypted digital content (EDC) through a communication channel separate from the channel used to receive licence information (LI).

7. A computer program comprising program code to execute all the steps of method according to any of claims 5-6, when the program is executed on a computer.

8. A computer-readable data carrier, comprising computer-executable instructions to execute all the steps of the method according to any of claims 5-6.

9. A system for distributing encrypted digital content (EDC), **characterised in that** the system comprises:
- a memory (521) of encrypted digital content (EDC), encrypted using content symmetric key (CSK),
- a communication interface (523) configured to read from a content player (100) a player public key (PpuK),
- a symmetric encryption unit (514), configured to generate licence information (LI), by encrypting, using the player public key (PPuK), the content symmetric key (CSK), adding to the encrypted content symmetric key (ECSK) conditions for content usage (CCU), pre-set by the generator (522) and encrypting all using the licensor private key (LPrK),
- wherein the communication interface (523) is further configured to make available to the content player (100) the encrypted digital content (EDC) and the licence information (LI) associated with that content.

10. The system according to claim 9, **characterised in that** the memory (521) of encrypted digital content (EDC), the generator (522) of conditions for content usage (CCU) and the communication interface (523) form the modules of a licence generation unit (520), which is a device physically separate from a content encryption unit (510), comprising the asymmetric encryption module (514).

11. The system according to claim 10, **characterised in that** the content encryption unit (510) further comprises a memory (511) of unencrypted digital content (DC) and a symmetric encryption unit configured to encrypt, using the content symmetric key (CSK) obtained from generator (512), the digital content (DC) into the encrypted digital content (EDC).

12. The system according to claim 10, **characterised in that** the licence generation unit (520) has a form of an interactive content delivery kiosk.

13. The system according to any of claims 9-12, **characterised in that** the conditions for content usage (CCU) comprise at least one of the following conditions: a deadline for the rendering of content, a number of allowed renderings, permitted locations for the rendering of content.

14. A computer-implemented method for encrypted content delivery, **characterised in that** it comprises the steps of:
- reading the encrypted digital content (EDC), encrypted using a content symmetric key (CSK),
- reading a player public key (PPuK) from a player (100),
- generating a licence information (LI) by encrypting the content symmetric key (CSK) using the player public key (PPuK), adding to the encrypted content symmetric key (ECSK) the determined conditions for content usage (CCU) and by encrypting it together using the licensor private key (LPrK),
- and making available the encrypted digital content (EDC) and the associated licence information (LI) to the content player (100).

15. A system for distribution of encrypted digital content, comprising the system for delivery of encrypted digital content according to any of claims 9-13 and the encrypted digital content players according to any of claims 1-4.
